# DEMANDE DE BREVET EUROPEEN

(11) **EP 4 782 304 A1**
(43) Date de publication de la demande: **29.07.2026**
(21) Numéro de dépôt: 25226824.8
(22) Date de dépôt: 23.12.2025
(51) Int. Cl.: B62B 3/14, B62B 5/00

(54) **CHARIOT DE GRANDE DISTRIBUTION AVEC FONCTIONS AUGMENTÉES D'ENREGISTREMENT AUTOMATIQUE SÉCURISÉ**

(30) Priorité: 30.12.2024 FR 2415407
(71) Demandeur: Gouraud, Eddy, 85300 Challans (FR)
(72) Inventeur: Gouraud, Eddy, 85300 Challans (FR)

(57) **Abrégé**

Chariot de grande distribution sécurisé comportant un panier de chargement d'articles (4) fixé sur une base roulante (8) par l'intermédiaire d'un dispositif de pesée, et un boîtier amovible (20) maintenu sur le chariot dans un support (14), comportant un dispositif de lecture d'un code marqué sur les articles, un système de vision équipé d'une caméra (36) de vision du panier (4), disposant de moyens réalisant par une analyse des images utilisant une reconnaissance de formes des articles un suivi automatique du mouvement des articles depuis la lecture du code jusqu'à sa dépose dans le panier (4).

## Description

### Domaine technique de l'invention

La présente invention concerne un chariot de grande distribution comprenant des fonctions augmentées d'enregistrement automatique sécurisé évitant à la clientèle de décharger chacun de ses articles à la caisse, permettant ainsi de supprimer l'attente en sortie.

### Arrière-plan technologique

Pour la plus grande partie de la clientèle des grandes surfaces de distribution, leur visite dans les hypermarchés est gâchée par le passage inévitable aux points d'encaissements. En effet, l'attente est souvent interminable et il est fastidieux de décharger tout son chariot pour le remplir juste après.

Les hypermarchés sont bien conscients de la situation et tentent d'y répondre avec les caisses automatiques où les clients scannent eux-mêmes leurs achats.

On commence aussi à voir apparaitre certains chariots connectés permettant à la clientèle de scanner ses articles lors de la dépose en évitant ainsi l'attente en caisse.

Mais ces chariots présentent pour la quasi-totalité des inconvénients majeurs tels que l'intégration compliquée dans l'écosystème des distributeurs car ces chariots coûteux et fragiles doivent rester à l'intérieur du magasin pour éviter le vandalisme, le vol, et surtout pour pouvoir se recharger, impactant considérablement l'espace utile de l'enseigne. Cela impose également à la clientèle de sortir du magasin avec leurs sacs de provisions pour laisser le chariot à l'intérieur.

Un autre problème important est la protection contre la fraude avec des articles qui sont déposés dans le chariot sans avoir été scannés. Afin de l'éviter un type de chariot connu, présenté notamment par le document FR-A1-3004688, comporte une cage fermant le panier recevant les articles, comprenant une entrée équipée d'un scanner et d'une pesée afin de confirmer l'identification du produit entrant. Un tapis roulant emmène ensuite les articles déposés dans l'entrée vers deux zones de stockage différenciées dans le chariot suivant le type d'article. De cette manière il n'est pas possible d'ajouter des articles dans la cage du chariot sans passer par les identifications qui entraînent leur facturation, ou de reprendre l'article pour l'échanger avec un autre du même poids et moins cher.

Toutefois ce type de chariot comprenant une cage, une entrée sécurisée et un tapis roulant de distribution dans le chariot est peu esthétique avec sa cage, est peu ergonomique, et est complexe à réaliser avec la cage et le tapis roulant, ce qui entraîne une masse importante et des coûts élevés.

### Description générale de l'invention

La présente invention a notamment pour but d'éviter ces inconvénients de la technique antérieure.

Elle propose à cet effet un chariot de grande distribution sécurisé comportant un panier de chargement d'articles fixé sur une base roulante par l'intermédiaire d'un dispositif de pesée, et un boîtier amovible maintenu sur le chariot, comportant un dispositif de lecture d'un code marqué sur les articles, ce chariot étant remarquable en ce que le boîtier comporte un système de vision équipé d'une caméra de vision du panier, réalisant par une analyse des images utilisant une reconnaissance de formes des articles un suivi automatique du mouvement des articles depuis la lecture du code jusqu'à sa dépose dans le panier.

Un avantage de ce chariot est qu'en conservant une architecture habituelle des chariots comportant un panier ouvert sur le dessus, avec son dispositif de lecture qui peut être fixé sur la barre prévue pour pousser le chariot, en ajoutant le système de vision avec sa fonction de suivi du mouvement des articles vers le panier, on s'assure de manière automatique de la correspondance entre tous les articles scannés et tous les articles déposés dans le panier du chariot et une surveillance pour éviter un échange, ce qui évite toute possibilité de fraude.

Le chariot de grande distribution selon l'invention peut comporter de plus une ou plusieurs des caractéristiques suivantes, qui peuvent être combinées entre elles.

Avantageusement, le boîtier comporte une base de données des articles contenant leurs références et leur masse.

Avantageusement, le système de vision dispose de moyens réalisant par une analyse des images un suivi automatique du mouvement des mains du client entre la lecture du code de l'article et sa dépose dans le panier.

Avantageusement, le chariot comporte des moyens de signalement lors d'une absence de suivi du mouvement de l'article ou des mains entre la lecture du code de l'article et sa dépose dans le panier.

Dans ce cas, avantageusement les moyens de signalement comportent un voyant s'éclairant de plusieurs couleurs.

De plus, avantageusement le voyant est disposé sur le dessus du boîtier dans sa position fixée sur le chariot.

Avantageusement, le boîtier présente une forme plate ajustée dans une goulotte du support qui est inclinée suivant un angle compris entre 30 et 60°.

Avantageusement, le boîtier comporte un connecteur électrique disposé sur sa face inférieure, qui se branche automatiquement sur un connecteur correspondant disposé au fond d'un logement du support quand il est déposé dedans.

Dans ce cas, avantageusement le connecteur électrique transmet des mesures du dispositif de pesée quand le boîtier est maintenu sur le chariot, et un courant de recharge quand il est rangé dans une station de recharge.

L'invention a aussi pour objet un procédé d'utilisation d'un chariot comprenant l'une quelconque des caractéristiques précédentes, remarquable en ce qu'il comporte une étape de suivi de mouvement des articles par le système de vision entre la lecture de son code et sa dépose dans le panier.

Dans ce cas, avantageusement le procédé comporte en parallèle de l'étape de suivi du mouvement des articles, une étape de suivi du mouvement des mains du client déplaçant l'article.

### Brève description des figures

L'invention sera mieux comprise et d'autres caractéristiques et avantages apparaîtront plus clairement à la lecture de la description ci-après donnée à titre d'exemple, en référence aux dessins annexés dans lesquels :
[Fig.1] est une vue de côté d'un chariot de grande distribution conforme à l'invention comportant un boitier amovible et un panier de pesée ;
[Fig.2] est une vue en perspective de ce chariot présentant le boîtier amovible détaché ;
[Fig.3] est une vue de dessus de ce chariot ;
[Fig.4] est une vue avant de ce chariot présentant la partie supérieure ;
[Fig.5] est une vue arrière de ce chariot ;
[Fig.6] est une vue du chariot présentant l'ouverture de la porte arrière du panier ;
[Fig.7] est une vue arrière du chariot présentant le système de pesée du panier contenu dans la cage de ce chariot ;
[Fig.8] est une vue arrière du boîtier amovible fixé sur le chariot ;
[Fig.9] est une vue avant du boîtier amovible fixé sur le chariot ;
[Fig.10] est une vue arrière de ce boîtier détaché du chariot ;
[Fig.11] est une vue avant du boîtier ;
[Fig.12] est une vue de dessous du boîtier ;
[Fig.13] est une vue en coupe transversale suivant un plan vertical de ce boîtier ;
[Fig.14] est une vue en coupe de détail passant par l'axe du connecteur électrique du boîtier ;
[Fig.15] est une vue d'une station de recharge des batteries recevant les boîtiers amovibles du magasin ;
[Fig.16] est un schéma fonctionnel d'un algorithme de gestion du chariot.

### Description d'un mode de réalisation préféré de l'invention

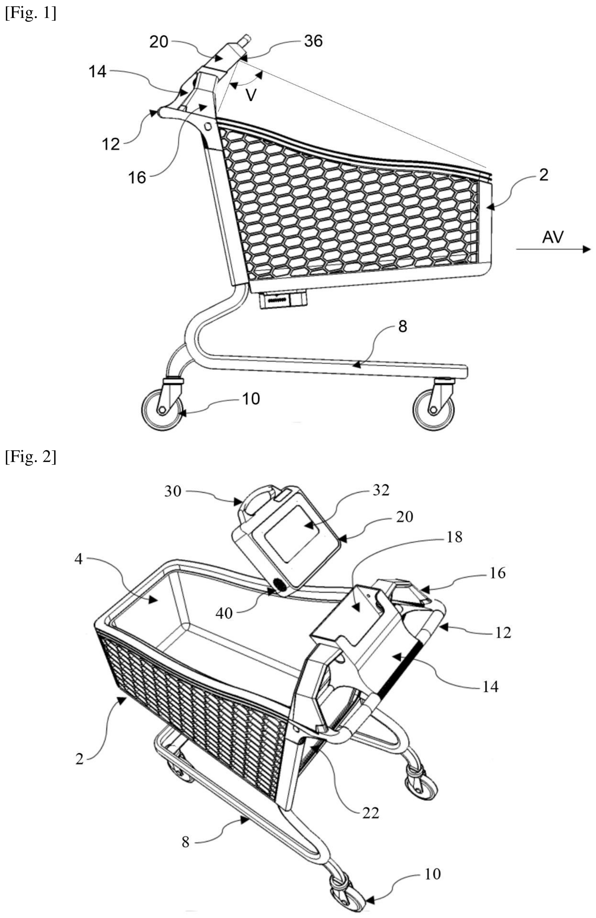

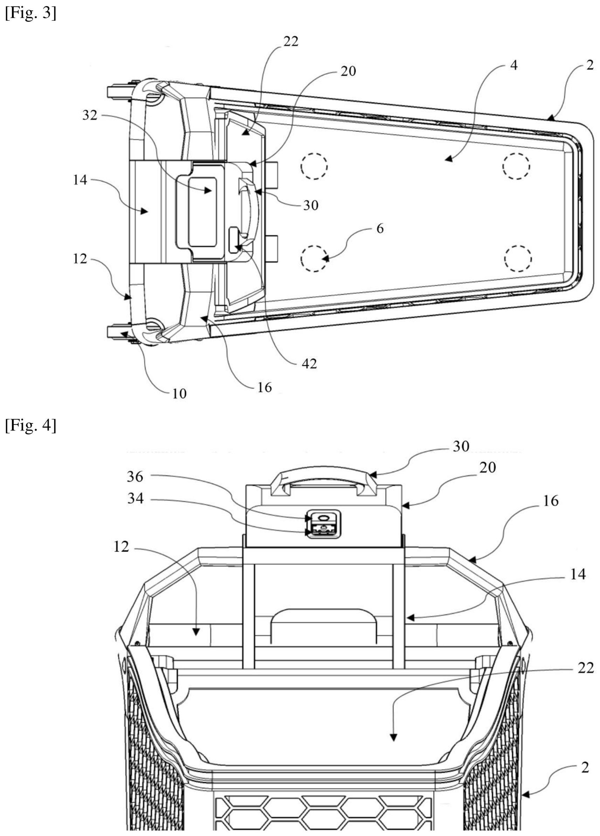

Les figures 1 à 8 présentent un chariot disposant d'un côté avant AV tourné vers le sens de marche, comportant une cage 2 recevant un panier de pesée 4 ajusté à l'intérieur, qui repose sur un châssis 8 par l'intermédiaire de capteurs de poids 6 afin de permettre une pesée permanente de ce panier avec son contenu.

Le châssis 8 reposant sur des roulettes 10 comporte en partie supérieure une barre arrière transversale 12 permettant à un client de pousser le chariot, recevant au-dessus un support 14 présentant une ouverture supérieure 18 formant une goulotte descendant vers l'arrière suivant un angle compris entre 30 et 60°, en particulier de 45°, qui reçoit un boîtier amovible 20 se glissant à l'intérieur de manière ajustée. Chaque côté du support 14 comporte un renfort latéral 16 qui part du dessus de ce support pour rejoindre l'extrémité de la barre de poussée du chariot 12.

Le panier de pesée 4 épouse la forme intérieure de la cage du chariot 2 avec un retrait suffisant d'une dizaine de millimètres pour éviter le contact entre eux lors des mouvements du panier. Le panier de pesée 4 repose uniquement sur quatre capteurs 6 fixés sur le châssis 8, répartis dans les angles afin d'apporter une stabilité à ce panier, qui donnent le poids total du panier chargé en additionnant les mesures de chaque capteur.

En variante on peut utiliser uniquement trois capteurs 6 disposés en triangle ce qui assure la stabilité du panier de pesée 4, ou un seul ou deux capteurs suivant leur technologie s'ils sont capables d'apporter cette stabilité tout en gardant la précision de mesure nécessaire.

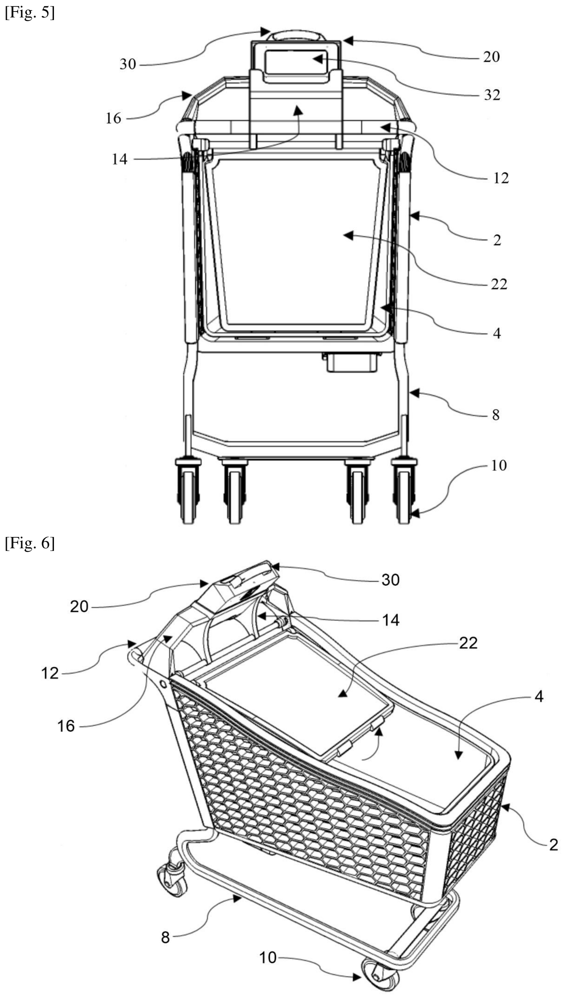

La cage 2 et le panier de pesée 4 présentent une ouverture arrière complète, fermée par une porte arrière 22 fixée par un pivot supérieur de manière à permettre son basculement vers l'avant présenté [Fig.6] quand un autre chariot rentre dans le panier pour les emboîter lors de leurs rangements.

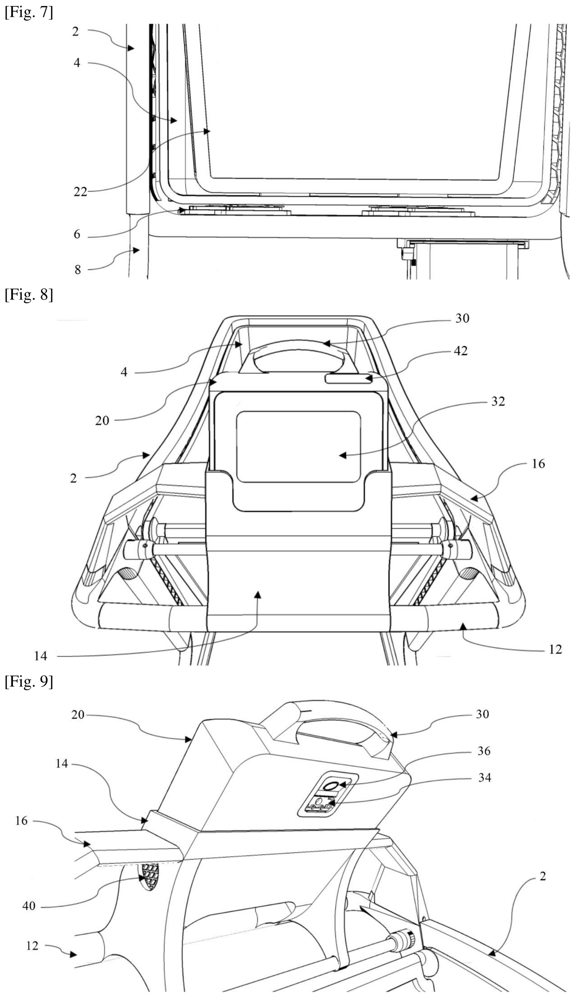

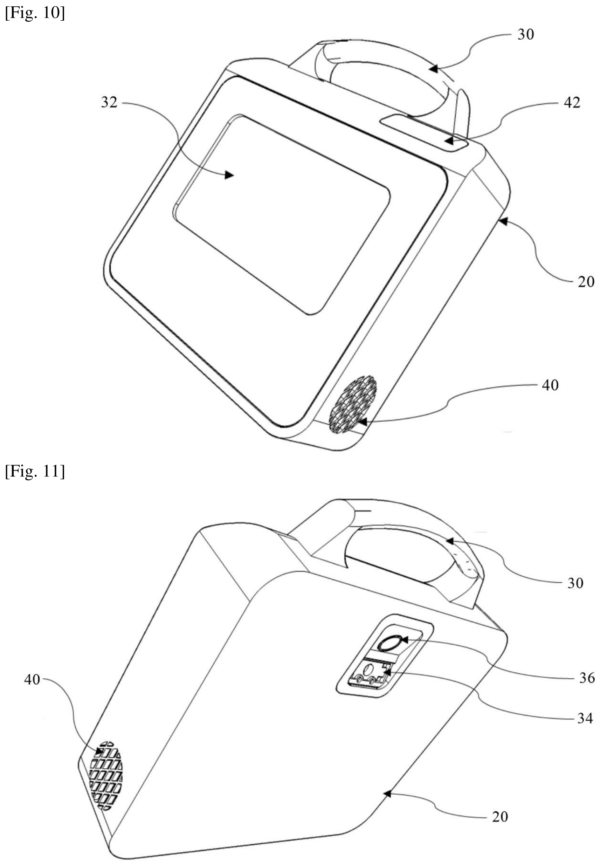

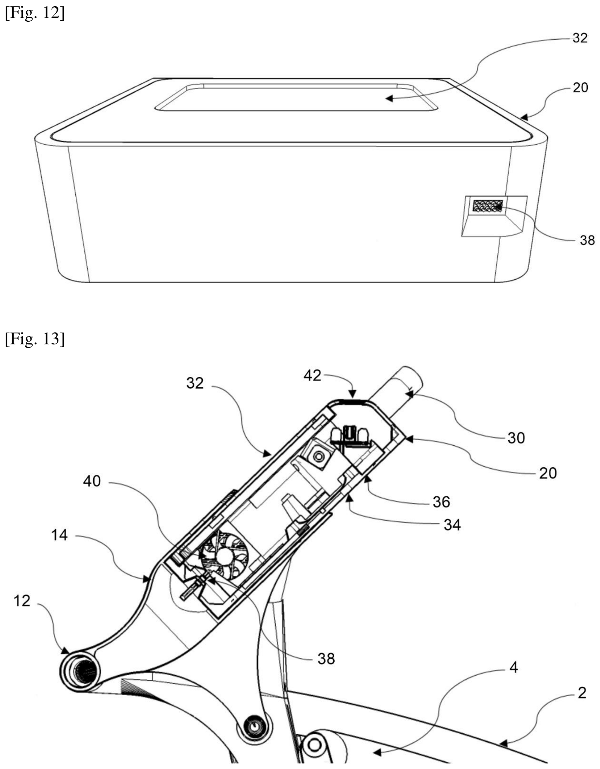

Les figures 9 à 14 présentent le boitier amovible 20 comprenant une poignée supérieure 30 permettant sa sortie de la goulotte du support 18.

Le boîtier amovible comporte les principaux composants suivants, à l'intérieur une carte de calcul et une batterie rechargeable, sur sa face arrière un écran tactile 32 et un voyant 42 disposées au-dessus, au milieu de sa face avant dans l'axe médian du chariot un scanner de lecture de code d'articles 34 qui peut être du type code-barres ou QR-code et une caméra 36, sur le côté un ventilateur 40 avec sa grille de passage d'air disposée en face d'une ouverture correspondante du support 14 pour dissiper les calories produites dans le boîtier, et en dessous un connecteur électrique 38.

Le boîtier 20 de forme plate comporte dans le support 14 une face arrière comprenant une inclinaison d'environ 45° qui présente l'écran 32 face à l'utilisateur pour faciliter sa lecture. Le voyant 42 passant du vert au rouge selon l'état de la machine et de la validation de l'article scanné et déposé dans le panier 4, est disposé en partie supérieure du boîtier 20 sur une face horizontale visible quelle que soit la position de l'utilisateur autour du chariot afin de permettre une compréhension immédiate sur la bonne validation ou non de l'article choisi, même si l'utilisateur n'est pas derrière le chariot pour vérifier l'affichage de son panier sur l'écran.

La caméra 36 fixée sur la face avant inclinée du boîtier 20, présente une inclinaison lui donnant un angle vision V permettant de couvrir l'ensemble du volume du panier 4.

Le connecteur électrique inférieur 38 s'ajuste automatiquement sur un connecteur correspondant 44 disposé au fond de la goulotte 18 pour former un branchement automatique lors de la descente du boîtier 20 à l'intérieur, qui permet un transfert de données venant des capteurs 6 du panier de pesée 4 vers le boîtier.

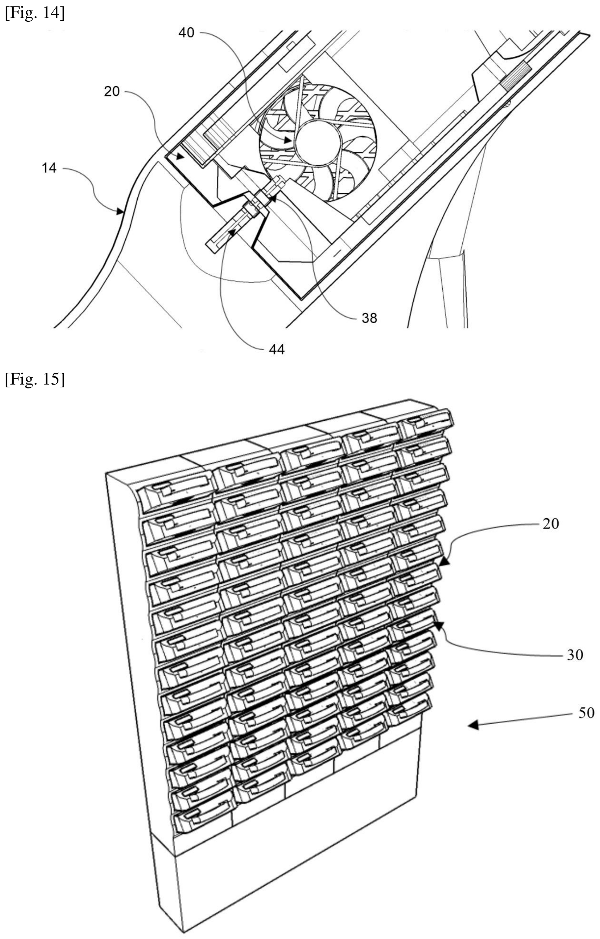

Le connecteur électrique inférieur 38 permet aussi une recharge de la batterie du boîtier 20, en le plaçant dans un rayonnage formant une station de recharge 50 présentée [Fig.15], comprenant un ensemble de logements descendant recevant chacun un boîtier pour assurer automatiquement le branchement de ce connecteur sur une prise au fond du logement. La poignée 30 dépassant en avant de la station de recharge facilite la prise du boîtier 20 pour le placer dans la goulotte 18 du support du chariot 14.

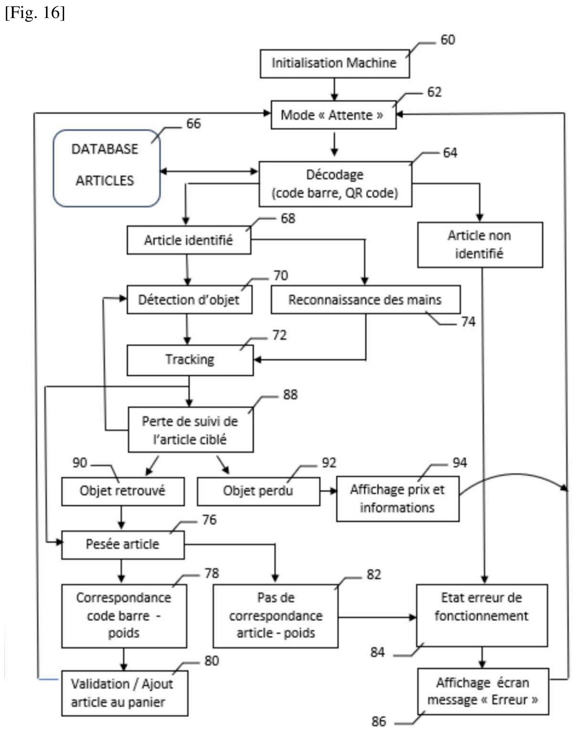

L'utilisation du chariot augmenté selon l'invention est présentée [Fig.16]. A son arrivée, le client du magasin récupère un boitier amovible 20 qui lui a été attribué par la station de recharge 50, et dans une première étape 60 le positionne sur le support 14 de son chariot. Dans une étape suivante 62 le boitier 20 qui était en veille sur la station de recharge 50 passe alors automatiquement en mode actif.

Le client du magasin peut ensuite commencer ses achats en scannant dans une étape suivante 64 chacun de ses articles présentés par le client devant le lecteur de code 34 du boîtier 20, avant de le déposer dans le panier 4. La carte de calcul du boîtier 20, reliée à une base de données des articles référencés 66, les identifie dans une opération suivante 68.

La carte de calcul contient aussi un algorithme de traitement des images en temps réel délivrées par la caméra 36 surveillant tout le volume grâce à son inclinaison, qui dans une opération suivante 70 détecte l'article par reconnaissance de sa forme, puis dans une opération suivante 72 suit son mouvement en s'assurant qu'il a été bien posé dans le panier 4.

Dans une opération menée en parallèle 74 l'algorithme réalise une reconnaissance des images d'une ou des deux mains du client pour suivre leurs mouvements accompagnant l'article allant du lecteur de code 34 au fond du panier 4, ce qui est utile en particulier quand la main cache l'article dans son mouvement.

Dans une opération suivante 76 le panier de pesée 4 détecte aussitôt avec ses capteurs 6 la variation de poids du panier complet, et transmet cette information au boitier 20 qui va la comparer avec l'article identifié précédemment par la lecture du code.

Si dans l'étape 78 la variation de poids correspond avec la masse de l'article enregistrée dans la base de données du magasin 66, alors dans l'étape suivante 80 l'article est validé avec le voyant 42 passant vert, et ajouté dans la liste d'achat du client. L'algorithme retourne alors à l'étape préliminaire 62 avec le mode actif d'attente de passage d'un article.

A l'inverse, si dans l'étape 82 le poids actualisé du panier 4 ne correspond pas avec l'article dernièrement posé, alors dans une étape suivante 84 le système se met en défaut, et dans une étape suivante 86 indique au client par le voyant 42 passant au rouge et par un message sur l'écran 32 qu'il doit retirer son dernier article pour retrouver l'état précédemment validé.

A tout moment le client peut afficher sur l'écran 32 la liste de chacun des articles posés dans son chariot, et voir en particulier le prix de chacun de ses articles ainsi que le montant total des achats.

Si dans l'opération de suivi du mouvement de l'article et des mains 72, l'algorithme dans une étape suivante 88 perd le suivi de cet article ou des mains, il continue à analyser les images pour voir si dans une étape suivante 90 il finit par le retrouver, ce qui conduit alors à l'opération 76 de détection de la variation de poids du panier 4.

Si par contre dans une étape suivante 92 il ne retrouve pas l'article qui est perdu, par exemple si l'article où les mains sortent du champ de vision de la caméra 36, on a alors à un passage du voyant 42 au rouge signalant le défaut, et l'affichage sur l'écran 32 de l'article avec son prix correspondant à titre d'information, sans l'ajouter à la liste d'achat du client.

L'algorithme ne permet pas de passer plusieurs articles en même temps. Si l'utilisateur présente deux articles en même temps, l'algorithme de traitement d'image détecte alors plusieurs articles et la machine se met en défaut avec 1, passage du voyant 42 au rouge.

La détection des articles par la lecture du code et par la reconnaissance des formes, le suivi du mouvement de ces articles et des mains les accompagnant associé à la pesée, permettent d'empêcher l'utilisateur de poser un article à bas prix, même de poids identique, pour y placer un article à prix plus élevé.

## Revendications

1. Chariot de grande distribution sécurisé comportant un panier de chargement d'articles (4) fixé sur une base roulante (8) par l'intermédiaire d'un dispositif de pesée (6), et un boîtier amovible (20) maintenu sur le chariot dans un support (14), comportant un dispositif de lecture (34) d'un code marqué sur les articles, **caractérisé en ce que** le boîtier (20) comporte un système de vision équipé d'une caméra (36) de vision du panier (4), disposant de moyens réalisant par une analyse des images utilisant une reconnaissance de formes des articles un suivi automatique du mouvement des articles depuis la lecture du code jusqu'à sa dépose dans le panier (4).

2. Chariot selon la revendication 1, **caractérisé en ce que** le boîtier (20) comporte une base de données des articles (66) contenant leurs références et leur masse.

3. Chariot selon la revendication 1 ou 2, **caractérisé en ce que** le système de vision dispose de moyens réalisant par une analyse des images un suivi automatique du mouvement des mains du client entre la lecture du code de l'article et sa dépose dans le panier (4).

4. Chariot selon l'une quelconque des revendications précédentes, **caractérisé en ce qu'**il comporte des moyens de signalement lors d'une absence de suivi du mouvement de l'article ou des mains entre la lecture du code de l'article et sa dépose dans le panier (4).

5. Chariot selon la revendication 4, **caractérisé en ce que** les moyens de signalement comportent un voyant (42) s'éclairant de plusieurs couleurs.

6. Chariot selon la revendication 5, **caractérisé en ce que** le voyant (42) est disposé sur le dessus du boîtier (20) dans sa position fixée sur le chariot.

7. Chariot selon l'une quelconque des revendications précédentes, **caractérisé en ce que** le boîtier (20) présente une forme plate ajustée dans une goulotte (18) du support (14) qui est inclinée suivant un angle compris entre 30 et 60°.

8. Chariot selon l'une quelconque des revendications précédentes, **caractérisé en ce que** le boîtier (20) comporte un connecteur électrique (38) disposé sur sa face inférieure, qui se branche automatiquement sur un connecteur correspondant (44) disposé au fond d'un logement du support (14) quand il est déposé dedans.

9. Chariot selon la revendication 8, **caractérisé en ce que** le connecteur électrique (38) transmet des mesures du dispositif de pesée (6) quand le boîtier (20) est maintenu sur le chariot, et un courant de recharge quand il est rangé dans une station de recharge (50).

10. Procédé d'utilisation d'un chariot selon l'une quelconque des revendications précédentes, **caractérisé en ce qu'**il comporte une étape de suivi de mouvement des articles (72) par le système de vision entre la lecture de son code et sa dépose dans le panier (4).

11. Procédé d'utilisation d'un chariot selon la revendication 10, **caractérisé en ce qu'**il comporte en parallèle de l'étape de suivi du mouvement des articles (72), une étape de suivi du mouvement des mains du client (74) déplaçant l'article.
